Europäisches Patentamt

**European Patent Office**

Office européen des brevets

(11) Veröffentlichungsnummer: **0 013 729**
**B1**

(12) **EUROPÄISCHE PATENTSCHRIFT**

(45) Veröffentlichungstag der Patentschrift:
**12.08.81**

(51) Int. Cl.³: **G 01 B 11/06**, G 01 B 11/00,
G 01 N 17/00, H 01 L 21/66

(21) Anmeldenummer: **79105060.2**

(22) Anmeldetag: **10.12.79**

(54) Optische Messeinrichtung für Ätzgeschwindigkeiten undurchsichtiger Materialien.

(30) Priorität: **29.12.78 US 974571**

(43) Veröffentlichungstag der Anmeldung:
**06.08.80 Patentblatt 80/16**

(45) Bekanntmachung des Hinweises auf die Patenterteilung:
**12.08.81 Patentblatt 81/32**

(84) Benannte Vertragsstaaten:
**DE FR GB**

(56) Entgegenhaltungen:
**DE-A1-2 828 507**
**IMB TECHNICAL DISCLOSURE BULLETIN, Band 20, Nr. 11A, April 1978 New York**
**H. K. WILLCOX »Monitoring the Etch Rate of a Constantly Changing Reflective Surface« Seiten 4326, 4327.**

(73) Patentinhaber: **International Business Machines Corporation, Armonk, N.Y. 10504 (US)**

(72) Erfinder: **Kirk, Joseph Pennell, Chelsea Road, Chelsea, New York 12512 (US)**

(74) Vertreter: **Teufel, Fritz, Dipl.-Phys., Schönaicher Strasse 220, D-7030 Böblingen (DE)**

## Optische Meßeinrichtung für Ätzgeschwindigkeiten undurchsichtiger Materialien

Die Erfindung betrifft eine optische Meßeinrichtung für Ätzgeschwindigkeiten undurchsichtiger Materialien nach dem Oberbegriff des Hauptanspruchs. Ein bevorzugtes Anwendungsgebiet der Erfindung ist die Herstellung integrierter Schaltungen unter Einsatz von reaktiven Gasplasmen.

Einrichtungen und Verfahren, mit denen die Geschwindigkeit der Dickenänderung einer transparenten Schicht durch Lichtinterferenz gemessen werden, sind im Stand der Technik bekannt. Solche Verfahren werden beispielsweise angewandt, um die Ätzgeschwindigkeit einer Siliciumdioxidschicht über einem Siliciumsubstrat zu messen. Dabei wird ein Lichtstrahl auf die durchsichtige Schicht gerichtet und sowohl an deren Oberfläche als auch der Grenzfläche zum darunterliegenden undurchsichtigen Silicium reflektiert. Die Überlagerung der reflektierten Strahlungen führt zu Interferenzen und damit zu einem Lichtstrahl, dessen Intensität sich mit der Dickenänderung der Oxidschicht verändert. Wenn die aufgezeichnete Intensität eine Schwingungsperiode durchläuft, hat sich die Dichte der durchsichtigen Schicht um $\lambda/2n$ geändert, wobei $\lambda$ die Lichtwellenlänge und $n$ der Brechungsindex der durchsichtigen Schicht ist.

Andere Systeme wurden zur Bestimmung der Dickenänderungen von undurchsichtigen Materialien, beispielsweise Silicium oder Metall, vorgeschlagen. Die ältere deutsche Patentanmeldung nach DE-A-28 28 507 stellt ein solches Beispiel dar. Die dort vorgeschlagene Meßeinrichtung erlaubt es, die Ätzrate undurchsichtiger Materialien zu bestimmen, weist aber eine Reihe von Nachteilen und Beschränkungen auf. Beispielsweise erfordert sie einen Kompensator, um die Lichtwege der beiden Lichtstrahlen hoher Intensität gleich zu machen, die einmal von der nicht bedeckten, undurchsichtigen Oberfläche ausgehen und zum anderen von der undurchsichtigen Oberfläche, die unter einer durchsichtigen Schicht liegt.

Die vorliegende Erfindung stellt sich daher die Aufgabe, eine Meßeinrichtung für Ätzgeschwindigkeiten undurchsichtiger Materialien anzugeben, die keinen Kompensator der Lichtwege erfordert; außerdem soll eine visuelle Beobachtung der gemessenen Oberflächenbereiche möglich sein.

Diese Aufgabe wird durch die im Hauptanspruch gekennzeichnete Erfindung gelöst. Ausgestaltungen der Erfindung sind in den Unteransprüchen gekennzeichnet.

In einer bevorzugten Ausführungsform weist die Meßeinrichtung zwei parallele Lichtbündel auf, deren einer auf die Oberfläche des undurchsichtigen Materials gerichtet ist und der andere auf die Oberfläche eines benachbarten durchsichtigen Maskenmaterials. Die Ätzgeschwindigkeit für das undurchsichtige Material wird aus den Änderungen des Interferenzmusters bestimmt, das vom ersten und zweiten Lichtbündel erzeugt wird. Die Meßeinrichtung verwendet eine neuartige Anordnung von Strahlteilern, die für beide Lichtbündel gleiche Weglängen ergibt und außerdem Licht zur visuellen Beobachtung zur Verfügung stellt, das durch ein System dichroitischer Filter hindurchtritt.

Ein Ausführungsbeispiel der Erfindung wird nun im einzelnen anhand von Zeichnungen erläutert.

Es zeigt

Fig. 1 eine schematische Darstellung eines optiscen Systems zum Messen der Ätzgeschwindigkeit undurchsichtiger Materialien,

Fig. 2 einen Ausschnitt mit der schematischen Darstellung des Lichtwegs zur Oberfläche, die untersucht werden soll,

Fig. 3 ein Ausschnitt mit einer schematischen Darstellung des Lichtwegs nach der Reflexion von der Oberfläche, die untersucht werden soll und

Fig. 4 ein Ausschnitt mit der schematischen Darstellung des Lichtwegs zur visuellen Beobachtung der Oberflähce, die untersucht werden soll.

Die Erfindung schlägt ein optisches Interferometer-System vor, mit dem die Abtragsgeschwindigkeit von Material bzw. die Ätzrate einer undurchsichtigen Schicht bestimmt werden kann, die teilweise von einer transparenten, ebenfalls abgeätzten Schicht überlagert ist. Zu dem System gehört eine Lichtquelle, deren Strahlung in zwei Parallelbündel monochromatischen Lichts aufgespalten wird. Das erste Bündel wird auf die undurchsichtige zu ätzende Schicht fokussiert, das zweite Bündel auf die transparente Schicht, und zwar in einem kurzen Abstand vom Auftreffpunkt des ersten Bündels.

Die Ätzrate der transparenten Schicht wird bestimmt, indem die Änderungen der Lichtintensität gemessen und aufgezeichnet werden, die im zweiten Bündel durch Reflexion an der Oberfläche und der Unterfläche der transparenten Schicht (also der Oberfläche der undurchsichtigen Schicht unterhalb der transparenten Schicht) auftreten. Eine Schwingungsperiode der Lichtintensität entspricht einer Dickenänderung der transparenten Schicht von $\lambda/2n$, wobei $\lambda$ die Wellenlänge des Lichts und $n$ der Brechungsindex der transparenten Schicht bedeuten.

Die Ätzgeschwindigkeit (Ätzrate) der undurchsichtigen Schicht wird festgestellt, indem die Änderungen der Lichtintensität gemessen und aufgezeichnet werden, die aufgrund von Interferenzen zwischen den ersten an der undurchsichtigen Schicht reflektierten Bündel und dem Teil des zweiten Bündels entstehen, der an der Unterseite der durchsichtigen Schicht reflektiert wird, d. h. an der Oberfläche der undurchsichtigen Schicht, der nicht geätzt wird. Im letztgenannten Fall entspricht eine Schwingungsperiode der Lichtintensität der Entfernung einer Schicht des undurchsichtigen Materials in einer Dicke von $\lambda/2 - \Delta X(n-1)$, wobei $\lambda$ die Lichtwellenlänge, n der Brechungsindex der durchsichtigen Schicht und $\Delta X$ die Dicke der durchsichtigen Schicht bedeuten, die in der gleichen Zeit abgetragen wurde.

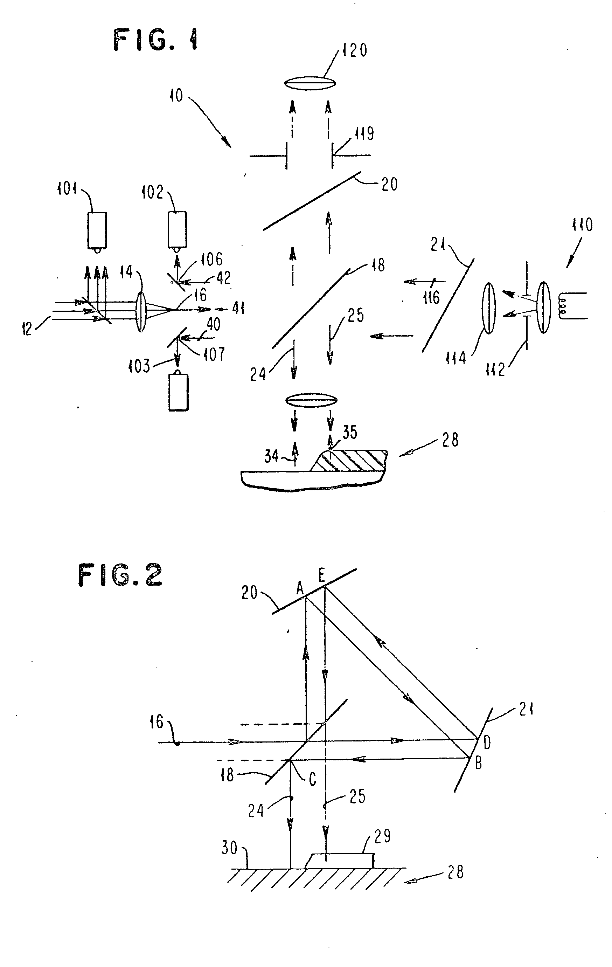

In Fig. 1 ist ein Interferometer-System 10 dargestellt, bei dem das Untersuchungslicht 12 durch eine Linse 14 längs des Lichtweges 16 auf einen Strahlteiler 18 fokussiert wird. Der Strahlteiler 18 ergibt zusammen mit den dichroitischen Strahlteilern 20 und 21 zwei getrennte Parallellichtbündel 24, 25, die auf die Oberfläche der Probe 28 auftreffen. Die Einzelheiten dieser Probenbeleuchtung werden anhand von Fig. 2 näher erläutert.

In Fig. 2 wird das Bündel 16 teilweise an der oberen Fläche des neutralen Strahlteilers 18 reflektiert, der unter einem Winkel von 45° bezüglich der Lichtquelle und der Probe 28 angeordnet ist. Der nach oben reflektierte Teil des Bündels 16 trifft auf den dichroitischen Strahlteiler 20 im Punkt A auf und wird von dort zum Punkt B des dichroitischen Strahlteilers 21 reflektiert. Dieser Teil des Bündels wird wiederum vom Punkt B auf den Punkt C der Unterseite des Strahlteilers 18 reflektiert und von dort durch Reflexion als Bündel 24 auf die Probe 28 gelenkt. Ein zweiter Teil des Bündels 16 wird durch den Strahlteiler 18 durchgelassen und trifft im Punkt D auf den Strahlteiler 21 auf. Dieser Teil des Bündels 16 wird von Punkt D reflektiert und trifft dann im Punkt E auf die Unterseite des Strahlteilers 20 auf, von wo er wieder in Richtung des Strahlteilers 18 reflektiert wird. Der Strahl durchläuft dann den Strahlteiler 18 und bildet das auf der Probe auftreffende Lichtbündel 25. Aus der Zeichnung ist ersichtlich, daß das Bündel 24 auf die undurchsichtige Oberfläche des Substrats auftrifft, während das Bündel 25 auf die obere Fläche der transparenten Schicht 29 gelangt (diese Schicht kann beispielsweise als Maske bei der Herstellung integrierter Schaltkreise dienen).

In der angegebenen Konfiguration weist der dichroitische Strahlteiler 20 eine Neigung von 22,5° bezüglich des Strahlteilers 18 auf, der dichroitische Strahlteiler 21 eine Neigung von 22,5° bezüglich Strahlteiler 18. Bei den dichroitischen Strahlteilern handelt es sich um übliche optische Elemente, die Licht bei einer bestimmten Wellenlänge durchlassen und Licht aller anderer Wellenlängen reflektieren. Im vorliegenden Fall wurde die Wellenlänge des Untersuchungslichts zu 632,8 nm gewählt.

Das Bündel 24 wird von der undurchsichtigen Oberfläche 30 reflektiert und läuft längs eines Lichtweges zurück, der im wesentlichen zum Strahl 24 parallel läuft, bis es zum Strahlteiler 18 gelangt. In ähnlicher Weise wird das Bündel 25 von sowohl der oberen Fläche der durchsichtigen Schicht 29 als auch der oberen Fläche der undurchsichtigen Schicht 30 reflektiert und bildet dadurch ein zurücklaufendes Bündel, das aus den miteinander interferierenden, an diesen Oberflächen reflektierten Bündeln besteht. Der zurücklaufende Teil des Bündels 24 wird als Bündel 34 bezeichnet, der zurücklaufende Teil des Bündels 25 als Bündel 35.

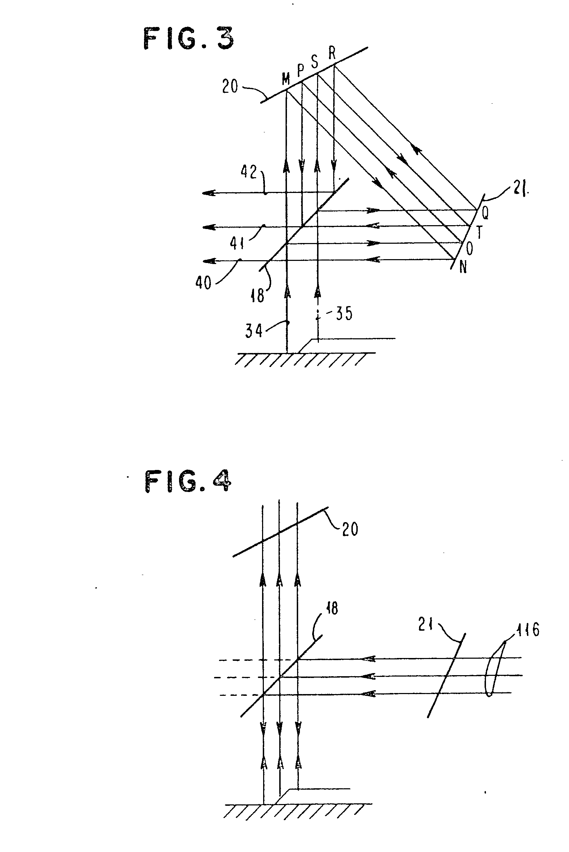

Die Wege des an der Probenoberfläche reflektierten Lichts werden nun anhand von Fig. 3 näher erläutert. In der Zeichnung ist dargestellt, wie ein Teil des Lichtbündels 34 den Strahlteiler 18 durchläuft und im Punkt M auf den Strahlteiler 20 auftrifft. Vom Punkt M wird das Bündel in Richtung des Strahlteilers 21 abgelenkt, wo es im Punkt N auftrifft und wiederum reflektiert wird, um längs des Lichtweges 40 den Strahlteiler 18 in Richtung Lichtquelle 12 zu verlassen. Ein weiterer Teil des Lichtbündels 34 wird vom Strahlteiler 18 reflektiert und trifft im Punkt O auf den dichroitischen Strahlteiler 21 auf, von wo es zum Punkt P des Strahlteilers 20 reflektiert wird. Das am Punkt P reflektierte Licht trifft in der Mitte des Strahlteilers 18 auf und läuft längs eines Lichtwegs 41 in Richtung der Lichtquelle 12.

In ähnlicher Weise wird ein Teil des Lichtbündels 35 an der Unterseite des Strahlteilers 18 reflektiert, trifft im Punkt Q des Strahlteilers 21 auf, von wo es zum Punkt R auf dem Strahlteiler 20 reflektiert wird. Das am Punkt R reflektierte Licht wird am Strahlteiler 18 wieder reflektiert und verläuft längs des Lichtweges 42 zur Lichtquelle 12 zurück.

Schließlich wird ein Teil des Lichtbündels 35 durch den Strahlteiler 18 durchgelassen und gelangt zum Punkt S auf den Strahlteiler 20, von wo es zum Punkt T auf den Strahlteiler 21 reflektiert wird. Der Teil des Bündels 35, der vom Punkt T reflektiert wird, durchläuft den Strahlteiler 18, um längs des Lichtwegs 41 in Richtung der Lichtquelle 12 zurückzukehren.

Das längs der Richtung 40 verlaufende Lichtbündel enthält also Licht des Bündels 34, das von der undurchsichtigen Oberfläche reflektiert wurde; das längs der Richtung 41 verlaufende Licht enthält Anteile des Bündels 35, die von der oberen Fläche der durchsichtigen Schicht und von der undurchsichtigen Fläche unterhalb der durchsichtigen Schicht reflektiert wurde, und weiterhin Licht des Bündels 34, das von der undurchsichtigen Oberfläche außerhalb der transparenten Schicht reflektiert wurde; das Licht längs des Weges 42 enthält Teile des Bündels 35, das von der oberen Fläche der transparenten Schicht reflektiert wurde, als auch von der undurchsichtigen Oberfläche unter der durchsichtigen Schicht.

Gemäß Fig. 1 gelangt Licht mit der Fortpflanzungsrichtung 41 zum Detektor 101 und enthält Bestandteile von Licht, die an drei verschiedenen Oberflächenebenen reflektiert wurden. In ähnlicher Weise gelangt Licht längs des Weges 42 zum Detektor 102 und enthält Licht, das von zwei Oberflächen der untersuchten Probe reflektiert wurde. Schließlich erreicht Licht längs des Weges 40 einen Detektor 103 und enthält Licht, das nur von einer einzigen Oberfläche der untersuchten Probe reflektiert wurde.

Zu dem System gehören weiterhin Einrichtungen zur visuellen Beobachtung der Oberfläche mit einer Lichtquelle 110, deren Licht durch eine Apertur 112 begrenzt ist und durch eine Linse 114 längs eines Lichtwegs 116 fokussiert wird. Die Einzelheiten dieses Lichtwegs sind in Fig. 4 dargestellt. Das Licht der Beleuchtungsquelle wird so ausgewählt, daß seine Frequenz durch die Strahlteiler 20, 21 durchgelassen wird. Das Licht der Beleuchtungsquelle durchläuft den Strahlteiler 21, wird an dem neutralen Strahlteiler 18 reflektiert und gelangt zur Oberfläche des Untersuchungskörpers (z. B. Halbleiterscheibe »wafer«). Das an dieser Oberfläche reflektierte Licht durchläuft den neutralen Strahlteiler 18 und den dichroitischen Strahlteiler 20 bis zur Beobachtungsstation, die in Fig. 1 dargestellt ist. Diese Beobachtungsstation umfaßt eine Linse 119 und eine Blende 120 und erlaubt es, den Bereich der Oberfläche zu beobachten, der von dem Untersuchungslicht für die Messung beleuchtet wird. Dadurch kann der Bediener des Geräts den Teil der untersuchten Oberfläche im ganzen überblicken. Die Justierung des Systems auf eine bestimmte Beobachtungsfläche wird dadurch erleichtert.

Zum Einleiten des Ätzprozesses wird ein reaktives Gasplasma benutzt und die Ausgangssignale der Detektoren 101, 102 und 103 zur laufenden Verfolgung des Ätzprozesses verwendet. Das zum Lichtweg 42 gehörige Ausgangssignal, das vom Detektor 102 aufgezeichnet wird, bezieht sich auf Licht, das von Oberfläche 29, d. h. der oberen Seite der Maske reflektiert wurde und außerdem auf Licht, das von der Fläche 30 unter der Maskenschicht stammt. Das Ausgangssignal dieses Detektors stellt eine sich ändernde Kurve dar, entsprechend der periodischen Änderung der Lichtintensität durch Interferenzen zwischen den reflektierten Bündeln bei der Dickenänderung der Maskenschicht beim Ätzen. Wenn das Signal eine Schwingungsperiode durchlaufen hat, ist eine Dickenänderung der Maskenschicht um den Wert $\lambda/2n$ aufgetreten, wobei $\lambda$ die Lichtwellenlänge und $n$ der Brechungsindex der Maskenschicht (z. B. Photoresist) ist. Auf diese Weise kann das Signal des Detektors 102 herangezogen werden, um die Ätzgeschwindigkeit der Maske zu bestimmen.

Das zum Lichtweg 41 gehörige und vom Detektor 101 aufgezeichnete Signal stellt Licht dar, das von allen drei Oberflächen des Untersuchungskörpers reflektiert wurde, wobei das Licht von der Oberfläche 30 längs des Lichtweges 34 verlief und das Licht in Richtung 35 die größte Intensität und gleiche Weglänge aufweist. Die Oszillationen mit der größten Amplitude im Meßsignal des Detektors 101 stellen also die periodische Änderung der Lichtintensität dar, die durch Interferenz zwischen den Strahlen hervorgerufen wird, die von der unbedeckten Oberfläche 30 und von der maskenbedeckten Oberfläche 30 bei fortschreitender Ätzung reflektiert werden. Diese Oszillationen sind infolge der Ätzung der Maske amplitudenmoduliert. Ein Zyklus im Meßsignal des Detektors 101 entspricht der Entfernung einer Schichtdicke (z. B. des unbedeckten Siliciums) von $\lambda/2 - \Delta X(n-1)$, wobei $\lambda$ die Lichtwellenlänge ist, $n$ der Brechungsindex der Maske und $\Delta X$ die Dicke der Maske, die während der gleichen Zeit abgetragen wurde. Der Wert $\Delta X$ ergibt sich aus dem Meßsignal des Detektors 102.

Auf diese Weise können die Ätzgeschwindigkeiten des Photoresists oder der Maske und die Ätzgeschwindigkeit der Siliciumscheibe gleichzeitig bestimmt werden. Gleichzeitig ist es möglich, die untersuchte Fläche visuell zu beobachten.

## Patentansprüche

1. Optische Meßeinrichtung für Ätzgeschwindigkeiten undurchsichtiger Materialien, deren Oberfläche teilweise von einer ebenfalls geätzten durchsichtigen Schicht bedeckt ist, bei der zwei zur Interferenz gebrachte Meßstrahlen einerseits von der unbedeckten Probenoberfläche und andererseits von der bedeckten Oberfläche reflektiert werden, dadurch gekennzeichnet, daß zur Erzeugung der beiden Beleuchtungsstrahlen (24, 25) und zur Vereinigung der beiden reflektierten Strahlen (34, 35) vorgesehen sind:
ein halbdurchlässiger Spiegel (18), der unter einem Winkel von 45° zur Flächennormale der Probe (28) und zum parallel der Probenfläche einfallenden Beleuchtungslicht (16) angeordnet ist, um einen Teil des Beleuchtungslichts (16) in eine von der Probenoberfläche abgewandte Richtung zu reflektieren,
eine über dem halbdurchlässigen Spiegel (18) angeordnete spiegelnde Fläche (20) und
eine, bezüglich des Beleuchtungslichts (16) hinter dem halbdurchlässigen Spiegel (18) angeordnete zweite spiegelnde Fläche (21), wobei die erste und die zweite spiegelnde Fläche (20 bzw. 21) bezüglich des halbdurchlässigen Spiegels (18) symmetrisch angeordnet sind und mit diesem jeweils einen Winkel von 22,5° einschließen.

2. Einrichtung nach Anspruch 1, dadurch gekennzeichnet, daß die erste und die zweite spiegelnde Fläche (20 bzw. 21) dichroitische Spiegel sind.

3. Einrichtung nach Anspruch 1 oder 2, dadurch gekennzeichnet, daß für die drei aus den reflektierten Strahlen (34, 35) entstehenden Ausgangsstrahlen (40, 41, 42) jeweils Photodetektoren (101, 102, 103) vorgesehen sind, mit denen die Intensität des an der unbedeckten Probenoberfläche reflektierten Lichts (40) gemessen wird, bzw. die durch Interferenz modulierte Intensität des am bedeckten Teil der Probe reflektierten Lichts (42), bzw. die Intensität des

durch Interferenz moduliertes Lichts, das sowohl an der bedeckten als auch der unbedeckten Oberfläche reflektiert wurde (41).

4. Einrichtung nach Anspruch 3, dadurch gekennzeichnet, daß die Dicke (d) der abgeätzten undurchsichtigen Schicht aus der Periode der Intensitätsschwankungen des Ausgangsstrahls (41) bestimmt wird, in dem die am bedeckten und am unbedeckten Teil der Oberfläche reflektierten Strahlen interferieren.

5. Einrichtung nach einem der Ansprüche 2 bis 4, dadurch gekennzeichnet, daß in Verlängerung des Lichtwegs hinter einem der dichroitischen Spiegel (z. B. 21) eine Beleuchtungseinrichtung (110) zur Beleuchtung der Meßfläche (30) angeordnet ist und daß in Lichtrichtung hinter dem anderen dichroitischen Spiegel (z. B. 20) eine Beobachtungseinrichtung (120) zur visuellen Beobachtung der Meßfläche angeordnet ist.

## Claims

1. Optical device for measuring the etch rates of an opaque material, the surface of which is partly covered by a transparent layer that is also subject to etching, wherein two measuring beams brought into interference are reflected respectively from the uncovered sample surface and from the covered surface, characterized in that for producing the two illumination beams (24, 25), and for combining the two reflected beams (34, 35), the following is provided:
a semi-transparent mirror (18) arranged at an angle of 45° both to the normal to the surface of the sample (28) and to the illumination light (16) impinging in parallel on the sample surface to reflect part of the illumination light (16) into a direction away from the sample surface,.
a mirror surface (20) arranged above the semi-transparent mirror (18), and
a second mirror surface (21) arranged behind the semi-transparent mirror (18) relative to the illumination light (16),
the first and the second mirror surfaces (20 or 21, respectively) being arranged symmetrically relative to the semi-transparent mirror (18) and each forming therewith an angle of 22.5°.

2. Device as claimed in claim 1, characterized in that the first and the second mirror surfaces (20 or 21, respectively) are dichroic mirrors.

3. Device as claimed in claim 1 or 2, characterized in that for the three output beams (40, 41, 42) formed by the reflected beams (34, 35) respective photodetectors (101, 102, 103) are provided with which the intensity of the light (40) reflected from the uncovered sample surface is measured, or the interference-modulated intensity of the light (42) reflected from the covered sample part, or the intensity of the interference-modulated light reflected (41) from the covered as well as from the uncovered surface.

4. Device as claimed in claim 3, characterized in that the thickness (d) of the etched-off opaque layer is determined from the period of intensity variations of the output beam (41) in which the beams reflected from the uncovered and the covered surface parts are interfering.

5. Device as claimed in one of claims 2 to 4, characterized in that in extension of the light path behind one of the dichroic mirrors (e. g. 21) an illumination device (110) is provided for illuminating the measured surface (30), and that in the direction of light, behind the other dichroic mirror (e. g. 20) an observation device (120) is arranged for the visual observation of the measured surface.

## Revendications

1. Dispositif optique pour mesurer les vitesses de décapage de matériaux opaques dont la surface est partiellement recouverte d'une couche transparente également décapée, dans lequel deux faisceaux de mesure amenés en interférence sont réfléchis, d'une part par la surface de l'échantillon non recouverte et d'autre part par la surface recouverte, caractérisé en ce que les moyens suivants sont prévus pour produire les deux faisceaux lumineux (24, 25) et pour combiner les deux faisceaux réfléchis (34, 35):
un miroir semi-transparent (18) disposé à un angle de 45° par rapport à la normale à la surface de l'échantillon (28) et à la lumière d'éclairage (16) parallèle incidente sur la surface de l'échantillon, afin de réfléchir une partie de la lumière d'éclairage (16) dans une direction opposée à la surface de l'échantillon,
une surface réfléchissante (20) disposée au-dessus du miroir semi-transparent (18), et
une seconde surface réfléchissante (21) disposée, par rapport à la lumière d'éclairage (16), derrière le miroir semi-transparent (18),
les première et seconde surfaces réfléchissantes (20 et 21, respectivement), étant disposées de façon symétrique par rapport au miroir semi-transparent (18) et formant avec celui-ci un angle de 22,5°.

2. Dispositif selon la revendication 1, caractérisé en ce que les première et seconde surfaces réfléchissantes (20, 21, respectivement) sont des miroirs dichroïques.

3. Dispositif selon la revendication 1 ou 2 caractérisé en ce que pour les trois faisceaux de sortie (40, 41, 42) formés par les faisceaux réfléchis (34, 35) sont prévus des photodétecteurs (101, 102, 103), à l'aide desquels on mesure respectivement l'intensité de la lumière (40) réfléchie par la surface non recouverte de l'échantillon, l'intensité, modulée par l'interférence, de la lumière (42) réfléchie par la partie recouverte de l'échantillon, l'intensité de la lumière modulée par l'interférence (41) qui a été réfléchie non seulement par la surface recouverte mais encore par la surface non recouverte.

4. Dispositif selon la revendication 3, caractérisé en ce que l'épaisseur (d) de la couche opaque décapée est déterminée par le cycle de variations d'intensité du faisceau de sortie (41) dans lequel interfèrent les faisceaux réfléchis par les parties recouvertes et non recouvertes de la surface.

5. Dispositif selon l'une quelconque des revendications 2 à 4, caractérisé en ce que, dans le prolongement du trajet de lumière, un dispositif d'éclairage (110) est disposé derrière l'un des miroirs dichroïques (par exemple 21) pour illuminer la surface à mesurer (30), et en ce que, dans le sens de la lumière, un dispositif d'observation (120) est disposé derrière l'autre miroir dichroïque (par exemple 20) pour l'observation visuelle de la surface à mesurer.

# FIG. 1

# FIG. 2

# FIG. 3

# FIG. 4